Europäisches Patentamt

European Patent Office

Office européen des brevets

(19)

(11) Veröffentlichungsnummer: **0 326 664 B1**

(12)

# EUROPÄISCHE PATENTSCHRIFT

(45) Veröffentlichungstag der Patentschrift: **20.05.92**

(21) Anmeldenummer: **88118903.9**

(22) Anmeldetag: **12.11.88**

(51) Int. Cl.⁵: **C01B 21/40**, B01D 53/18,
B01D 3/22, B01D 53/34

(54) **Verfahren und Vorrichtung zur Herstellung von Salpetersäure durch Oxidation und Absorption von Stickoxiden.**

(30) Priorität: **20.01.88 DE 3801490**

(43) Veröffentlichungstag der Anmeldung:
**09.08.89 Patentblatt 89/32**

(45) Bekanntmachung des Hinweises auf die
Patenterteilung:
**20.05.92 Patentblatt 92/21**

(84) Benannte Vertragsstaaten:
**AT BE CH DE ES FR GB GR IT LI LU NL SE**

(56) Entgegenhaltungen:
**EP-A- 0 026 418**
**EP-A- 0 047 191**
**EP-A- 0 256 533**
**GB-A- 527 037**

(73) Patentinhaber: **Uhde GmbH**
**Friedrich-Uhde-Strasse 15**
**W-4600 Dortmund 1(DE)**

(72) Erfinder: **Wiegend, Karl Wilhelm, Dr. Dipl.-Ing.**
**Weisse Taube 11**
**W-4600 Dortmund 50(DE)**
Erfinder: **Scheibler, Erich, Dipl.-Ing.**
**Sindernweg 38**
**W-4600 Dortmund 30(DE)**
Erfinder: **Thiemann, Michael, Dr. Dipl.-Ing.**
**Meininghausstrasse 12**
**W-4600 Dortmund 1(DE)**

(74) Vertreter: **Patentanwälte Meinke und Dabring-**
**haus Dipl.-Ing. J. Meinke Dipl.-Ing. W. Dab-**
**ringhaus**
**Westenhellweg 67**
**W-4600 Dortmund 1(DE)**

Rank Xerox (UK) Business Services
(3.08/2.19/2.0)

## Beschreibung

Die Erfindung betrifft ein Verfahren und eine Vorrichtung bzw. Bodenkolonne zur Herstellung von Salpetersäure durch Oxidation und Absorption von in einem Gasstrom zusammen mit Sauerstoff enthaltenen Stickoxiden ($NO_x$) in einer wässrigen Lösung in einer Gasflüssig-Kontaktvorrichtung im Gegenstrom bei größerem Oxidations- als Absorptionsvolumen.

Derartige Verfahren zur Salpetersäureherstellung sind seit langem bekannt. Dabei liegt die Schwierigkeit nicht in der Herstellung der Salpetersäure, sondern in der Gewährleistung einer ausreichend geringen Stickoxidkonzentration im Abgasstrom, welcher üblicherweise an die Atmosphäre abgegeben wird. Die Reinheitsanforderungen an die Abgase von Salpetersäureanlagen sind in den letzten Jahren aufgrund des zunehmenden Umweltbewußtseins mehr und mehr verschärft worden.

Um mit herkömmlichen Verfahren diesen Reinheitsanforderungen genügen zu können, wurden größere Kolonnen mit entsprechend größerer Bodenanzahl oder auch hintereinander geschaltete Kolonnen eingesetzt. Diese Lösungen sind aber aufgrund des hohen apparativen Aufwandes nicht wirtschaftlich.

In der EP-A-0 047 191 ist ein Verfahren zur Salpetersäureherstellung beschrieben, das gegenüber konventionellen Verfahren mit einer Verminderung des Oxidationsraumes gegenüber dem Absorptionsraum arbeitet. Dabei ist insbesondere vorgesehen, daß gegenüber herkömmlichen Volumenverhältnissen von Oxidations- zu Absorptionsraum von 15 bis 20 ein Verhaltnis kleiner als 7 eingesetzt wird. Dieses Verfahren befriedigt aber noch nicht, da eine ausreichende Abgasreinheit nach wie vor nur mit einer entsprechend hohen Kolonnenbodenanzahl und damit verbundenen hohen Kosten erreichbar ist.

In der EP-A-0 256 533 ist ein ähnliches Verfahren beschrieben, wobei der Kern der dortigen Erfindung in der Beeinflussung des Verhältnisses zwischen dem freien Gasraum einerseits und dem Flüssigkeitsvolumen auf dem Boden andererseits in den oberen Böden, dort den letzten acht Böden, liegt. Auch hier wird eine oben bereits angesprochene Vielzahl von Kolonnenböden in Kauf genommen.

Aufgabe der Erfindung ist die Schaffung einer Lösung, mit welcher eine hohe Abgasreinheit bei der Salpetersäureherstellung mit einfachen und wirtschaftlichen Mitteln erreicht werden kann.

Diese Aufgabe wird mit einem Verfahren der eingangs bezeichneten Art erfindungsgemäß dadurch gelöst, daß es bei einem Verhältnis von Oxidations- zu Absorptionsvolumen größer als 25, vorzugsweise 30, und bei einem Verhältnis von Absorptionsbodengrundfläche zur Bodenkolonnenquerschnittsfläche von 0,2 bis 0,9, vorzugsweise 0,375 bis 0,625, durchgeführt wird.

Es wurde überraschend gefunden, daß entgegen der durch den Stand der Technik (EP-A-0 047 191) nahegelegten Entwicklung durch diese Vergrößerung des Oxidationsraumes zum Absorptionsraum gegenüber herkömmlichen Verhältnissen von etwa 15 bis 20 bei Hoch- und Mitteldruckverfahren ohne kostenintensive konstruktive Maßnahmen, wie Hintereinanderschaltung mehrerer Anlagen oder Erhöhung der Bodenzahl von Bodenkolonnen, eine deutliche Verminderung des Stickoxidanteiles im Abgas erreicht wird. Hier ist auch vorgesehen, daß das Verfahren bei einem Verhältnis von Absorptionsbodengrundfläche zur Bodenkolonnenquerschnittsfläche von 0,2 bis 0,9, vorzugsweise 0,375 bis 0,625, durchgeführt wird. Durch diese Verfahrensführung wird auf einfache Weise eine Vergrößerung des Oxidationsraumes in einer Kolonne erreicht, da nicht mehr, wie bei herkömmlichen Verfahren, die gesamte Bodenkolonnenquerschnittsfläche als Absorptionsfläche benutzt wird, sondern der freibleibende Bereich der Bodenfläche zur Vergrößerung des Oxidationsraumes dient.

In Ausbildung der Erfindung ist vorgesehen, daß das Verfahren bei einer Gasleerrohrgeschwindigkeit von 0,4 bis 0,7 m/s, vorzugsweise 0,5 m/s, durchgeführt wird. Durch diese drastische Erhöhung der Gasleerrohrgeschwindigkeit gegenüber üblichen Werten von 0,2 m/s wird eine zusätzliche deutliche Verbesserung der Abgasreinheit ohne weitere konstruktiven Maßnahmen erreicht.

In weiterer Ausgestaltung sieht die Erfindung vor, daß das Verfahren bei einem Verhältnis vom Flüssigkeitsvolumen zum Gesamtvolumen von 0,02 bis 0,04, vorzugsweise 0,03, durchgeführt wird. Durch diese Verringerung des Flüssigkeitsvolumens von üblichen Verhältnissen von mindestens 0,05 wird die Vergrößerung des Oxidationsvolumens gegenüber dem Absorptionsvolumen bewirkt.

Zur Lösung der Aufgabe und Durchführung des erfindungsgemäßen Verfahrens ist auch eine Vorrichtung bzw. Bodenkolonne vorgesehen, die dadurch gekennzeichnet ist, daß zum Einstellen eines Verhältnisses von Oxidations- zu Absorptionsvolumen größer als 25, vorzugsweise 30, die Absorptionsbodenfläche gegenüber der gesamten Bodenfläche eines Bodens durch Wehre in einem Verhältnis von Absorptionsbodengrundfläche zur Bodenkolonnenquerschnittsfläche von 0,2 bis 0,9, vorzugsweise 0,375 bis 0,625, begrenzt ist.

Durch diese konstruktive Ausgestaltung ist eine besonders einfache Möglichkeit gegeben, das Absorptionsvolumen zu verringern und das Oxidationsvolumen zu vergrößern. Dabei können auch bereits bestehende Siebbodenkolonnen teilweise nachgerüstet werden, indem diejenigen Einzelböden, welche keine Einbauten, wie Kühlschlangen, aufweisen, zur Schaffung eines kleineren Absorptionsraumes durch Wehre begrenzt und die Öffnungen in der Bodenfläche außerhalb der Absorptionsbodenfläche verschlossen werden.

Dabei sieht die Erfindung vor, daß die Absorptionsbodenfläche rund oder halbkreisförmig oder auch mehreckig ausgebildet ist.

Es ist besonders zweckmäßig, daß oberhalb der Wehre Vorrichtungen zur Führung des Gasstromes angeordnet sind. Diese Vorrichtungen sind bevorzugt als Leitbleche ausgebildet. Durch diese Leitbleche wird der Gasstrom auf die Bodenfläche außerhalb der Absorptionsbodenfläche geleitet, so daß das Gas den gesamten Oxidationsraum durchströmt.

Die Erfindung ist nachstehend anhand der Zeichnung beispielsweise näher erläutert. Diese zeigt in schematischer Darstellung in

Fig. 1 in einem vereinfachten Längsschnitt eine Bodenkolonne zur Salpetersäureherstellung,

Fig. 2 einen Schnitt gemäß der Linie A-A in Fig. 1 nach einem ersten Ausführungsbeispiel,

Fig. 3 ein weiteres Ausführungsbeispiel im Schnitt und in

Fig. 4 ein anderes Ausführungsbeispiel.

Einer Siebbodenkolonne 1 zur Salpetersäureherstellung wird am Sumpf 2 über eine Gaszuführleitung 3 ein Gasstrom zugeführt, der Sauerstoff und Stickoxide (NO$_x$) enthält. Außerdem wird am Kopf 4 der Kolonne 1 über eine Leitung 5 flüssiges Aufgabewasser und im Mittelbereich 6 der Kolonne 1 über eine Leitung 7 flüssiges Kondensat aus einer stark verdünnten, wässrigen Salpetersäure zugeführt. Über eine Abgasleitung 8 am Kopf 4 wird Abgas in die Atmosphäre abgeleitet, während am Sumpf 2 über eine Produktleitung 9 Salpetersäure abgeführt wird.

Die Kolonne 1 weist im Inneren übereinander angeordnete Böden 10 auf, die durch Wehre 11 in zwei Bereiche unterteilt sind, eine Absorptionsbodenfläche 12 und eine freie Bodenfläche 13. Dabei ist die Absorptionsbodenfläche 12 als Siebboden mit Durchtrittsöffnungen für die Gasphase, die freie Bodenfläche 13 als durchgehende Platte ohne Öffnungen ausgebildet. Im Bereich oberhalb der Absorptionsbodenfläche 12 befindet sich, begrenzt durch die Wehre 11, ein Absorptionsraum 14 und oberhalb der freien Bodenfläche 13 sowie oberhalb des Absorptionsraumes 14 ein Oxidationsraum 15.

Oberhalb der Wehre 11 sind Leitbleche 16 mit Ausrichtung auf die freie Bodenfläche 13 angeordnet. Im oberen Bereich jedes Absorptionsraumes 14 ist ein in der Zeichnung nicht dargestellter Ablaufschacht zur Ableitung der flüssigen Phase in den darunter liegenden Absorptionsraum 14 angeordnet.

Der Verfahrensablauf ist dabei der folgende: Über die Leitung 3 wird der Kolonne 1 kontinuierlich am Sumpf 2 ein Sauerstoff und Stickoxide (NO$_x$) enthaltener Gasstrom zugeleitet, der in einer vorgeschalteten Verfahrensstufe produziert worden ist, worauf es hier nicht näher ankommt. Durch die Leitung 5 am Kopf 4 wird Wasser im Gegenstrom zum Gas oberhalb des obersten Bodens aufgegeben. Im Mittelbereich der Kolonne 6 tritt über die Leitung 7 das Kondensat aus einer stark verdünnten, wässrigen Salpetersäurelösung in die Kolonne 1 ein. Die flüssige Phase sammelt sich im Absorptionsraum 14 oberhalb der Absorptionsbodenfläche 12 eines jeden Bodens 10 und gelangt nach einer gewissen Verweilzeit über den Ablaufschacht in den Absorptionsraum 14 des darunter angeordneten Bodens.

Die Gasphase steigt von Sumpf 2 durch die Absorptionsbodenfläche 12 des untersten Bodens in den Absorptionsraum 14 auf und kommt dort mit der flüssigen Phase in Kontakt, so daß die bei der Salpetersäure-Absorption bekannten chemischen und physikalischen Austauschvorgänge ablaufen. Nach dem Durchtritt des Gases durch den Absorptionsraum 14 strömt das Gas in den Oxidationsraum 15 im Bereich oberhalb des Absorptionsraumes 12 und wird dort oxidiert. Durch die geschlossene freie Bodenfläche 13 des darüber angeordneten Bodens 10 kann das Gas nicht weiter nach oben aufsteigen, sondern wird durch die Leitbleche 16 in Richtung auf die freie Bodenfläche 13 des unteren Bodens geleitet. Diese Gasführung ist durch die Linie 17 in der Zeichnung dargestellt.

Vom Bereich des Oxidationsraumes oberhalb der freien Bodenfläche 13 steigt das Gas durch die darüber angeordnete Absorptionsbodenfläche 12 des nächsten Bodens 10 in den folgenden Absorptionsraum 14 auf und kommt mit der dort befindlichen flüssigen Phase in Kontakt, um dann auf die gleiche Art und Weise nach Umleitung durch die Leitbleche 16 zum nächsten Boden 10 aufzusteigen.

Gegenüber herkömlichen Verfahren wird also nicht die gesamte Bodenfläche als Absorptionsraum, sondern ein Teil der Bodenfläche auch als Oxidationsraum genutzt, so daß ohne den Bodenabstand zwischen den einzelnen Böden zu verändern, der Oxidationsraum vergrößert wird. Dabei müssen die Wehrhöhen gegenüber üblichen Wehrhöhen vergrößert werden, damit der von der Querschnittsfläche her kleinere Absorptionsraum noch ausreichend groß ist, um die chemischen und physikalischen Austauschvorgänge zwischen der Gas- und der Flüssigphase in ausreichendem Maße ablaufen zu lassen.

Vom untersten Absorptionsraum 14 oder je nach der erforderlichen Säurekonzentration auch von einem darüber angeordneten Absorptionsraum wird die flüssige Phase als Salpetersäureprodukt über die Leitung 9 abgezogen. Die vom obersten Absorptionsraum des obersten Bodens aufsteigende Gasphase gelangt vom obersten Oxidationsraum am Kolonnenkopf 4 durch die Leitung 8 aus der Kolonne 1 und wird an die Umgebung oder ggf. an eine Weiterverarbeitung abgegeben.

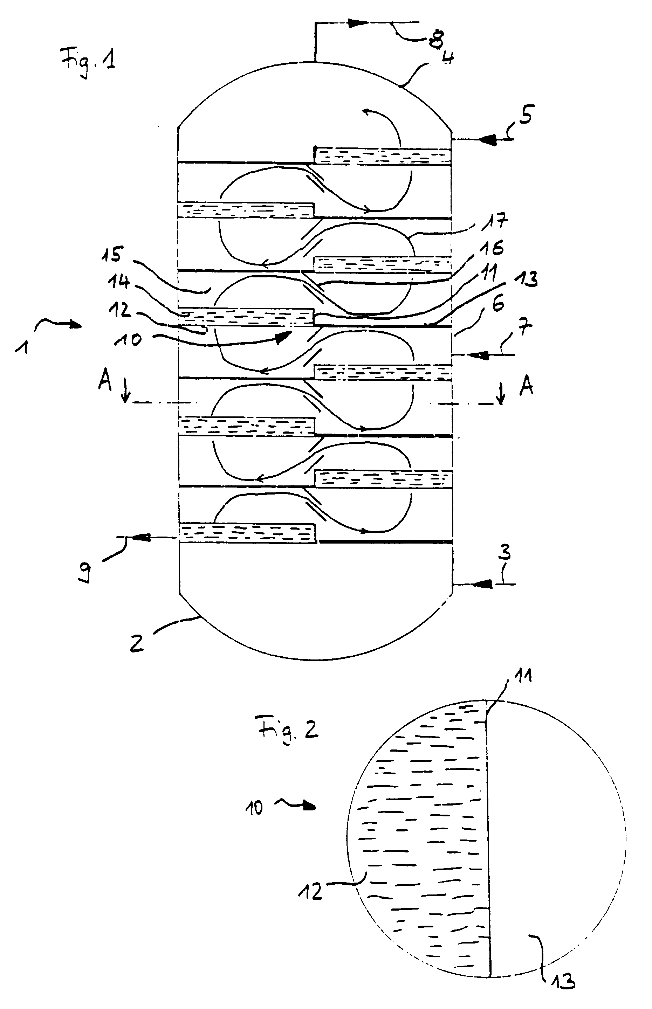

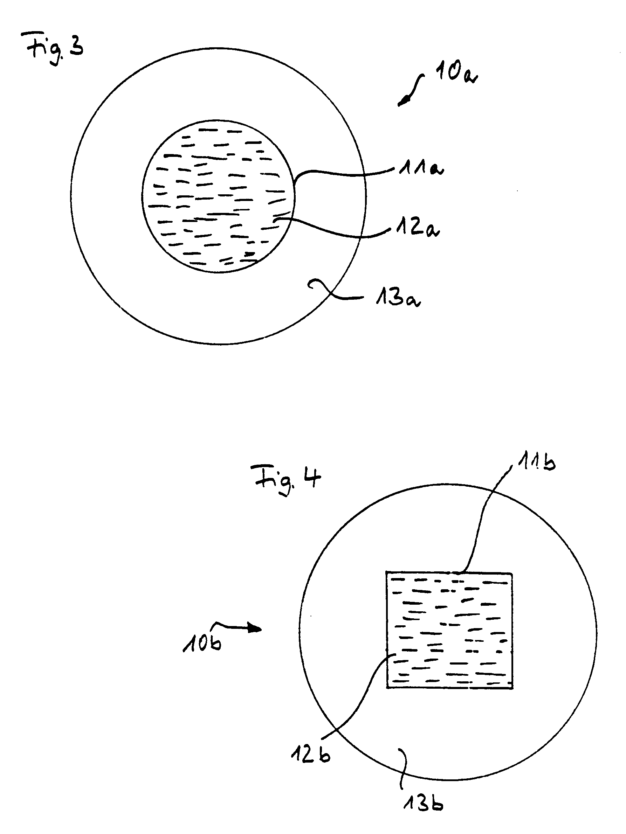

In Fig. 2 ist die Ausgestaltung eines Kolonnenbodens 10 dargestellt. Der Kolonnenboden 10 ist durch das Wehr 11 in zwei halbkreisförmige Bereiche unterteilt, die siebbodenförmig ausgebildete Absorptionsbodenfläche 12 mit Durchtrittsöffnungen für die aufsteigende Gasphase und die plattenförmige freie Bodenfläche ohne Durchtrittsöffnungen.

In den Fig. 3 und 4 sind weitere Ausführungsbeispiele für die Ausgestaltung eines Kolonnenbodens dargestellt, wobei die gleichen Bezugszeichen wie in Fig. 1 und 2 verwandt werden mit einem jeweiligen Index a bzw. b.

Nach der in Fig. 3 dargestellten Ausführungsform ist die Absorptionsbodenfläche 12a kreisförmig im Inneren des Bodens 10a angeordnet, während die freie Bodenfläche 13a ringförmig um die Absorptionsbodenfläche 12a angeordnet ist.

Nach Fig. 4 ist die Absorptionsbodenfläche 12b quadratisch im Zentrum des Bodens 10b angeordnet.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen. So kann insbesondere die Absorptionsbodenfläche eines Kolonnenbodens auch eine andere Ausbildung aufweisen, z.B. mehreckig oder mehrteilig, u. dgl. mehr.

**Patentansprüche**

1. Verfahren zur Herstellung von Salpetersäure durch Oxidation und Absorption von in einem Gasstrom zusammen mit Sauerstoff enthaltenen Stickoxiden ($NO_x$) in einer wässrigen Lösung in einer Gasflüssig-Kontaktvorrichtung im Gegenstrom bei größerem Oxidations- als Absorptionsvolumen,
dadurch gekennzeichnet,
daß es bei einem Verhältnis von Oxidations- zu Absorptionsvolumen größer als 25, vorzugsweise 30, und bei einem Verhältnis von Absorptionsbodengrundfläche zur Bodenkolonnenquerschnittsfläche von 0,2 bis 0,9, vorzugsweise 0,375 bis 0,625, durchgeführt wird.

2. Verfahren nach Anspruch 1,
dadurch gekennzeichnet,
daß es bei einer Gasleerrohrgeschwindigkeit von 0,4 bis 0,7 m/s, vorzugsweise 0,5 m/s, durchgeführt wird.

3. Verfahren nach Anspruch 1 oder 2,
dadurch gekennzeichnet,
daß es bei einem Verhältnis vom Flüssigkeitsvolumen zum Gesamtvolumen von 0,02 bis 0,04, vorzugsweise 0,03, durchgeführt wird.

4. Bodenkolonne zur Durchführung des Verfahrens nach einem der Ansprüche 1 bis 3,
dadurch gekennzeichnet,
daß zum Einstellen eines Verhältnisses von Oxidations- zu Absorptionsvolumen größer als 25, vorzugsweise 30, die Absorptionsbodenfläche (12) gegenüber der Gesamtbodenfläche eines Bodens (10) durch Wehre (11) in einem Verhältnis von Absorptionsbodengrundfläche zur Bodenkolonnenquerschnittsfläche von 0,2 bis 0,9, vorzugsweise 0,375 bis 0,625, begrenzt ist.

5. Bodenkolonne nach Anspruch 4,
dadurch gekennzeichnet,
daß die Absorptionsbodenfläche (12) rund oder halbkreisförmig ausgebildet ist.

6. Bodenkolonne nach Anspruch 4 oder 5,
dadurch gekennzeichnet,
daß die Absorptionsbodenfläche (12) mehreckig ausgebildet ist.

7. Bodenkolonne nach Anspruch 4 oder einem der folgenden,
dadurch gekennzeichnet,
daß oberhalb der Wehre (11) Vorrichtungen (16) zur Führung des Gasstroms angeordnet sind.

8. Bodenkolonne nach Anspruch 4 oder einem der folgenden,
dadurch gekennzeichnet,
daß die Vorrichtungen zur Führung des Gasstroms als Leitbleche (16) ausgebildet sind.

**Claims**

1. A process for the production of nitric acid by oxidation and absorption of nitrogen oxides ($NO_x$) contained in a gas flow together with oxygen in an aqueous solution in a gas-liquid contact apparatus in counter-flow relationship with a greater oxidation than absorption volume, characterised in that it is carried out with a ratio of oxidation to absorption volume of greater than 25, preferably 30, and with a ratio of absorption plate area to the plate column cross-sectional area of from 0.2 to 0.9, preferably from 0.375 to 0.625.

2. A process according to claim 1 characterised in that it is carried out with a gas empty tube speed of from 0.4 to 0.7 m/s, preferably 0.5 m/s.

3. A process according to claim 1 or claim 2 characterised in that it is carried out with a ratio of the liquid volume to the overall volume of from 0.02 to 0.04, preferably 0.03.

4. A plate column for carrying out the process according to one of claims 1 to 3 characterised in that to set a ratio of oxidation to absorption volume of greater than 25, preferably 30, the absorption plate area (12) is limited relative to the overall plate area of a plate (10) by weirs (11), in a ratio of absorption plate area to the plate column cross-sectional area of from 0.2 to 0.9, preferably from 0.375 to 0.625.

5. A plate column according to claim 4 characterised in that the absorption plate surface (12) is of a round or semicircular configuration.

6. A plate column according to claim 4 or claim 5 characterised in that the absorption plate surface (12) is of a polygonal configuration.

7. A plate column according to claim 4 or one of the following claims characterised in that arranged above the weirs (11) are devices (16) for guiding the gas flow.

8. A plate column according to claim 4 or one of the following claims characterised in that the devices for guiding the gas flow are in the form of guide plates (16).

**Revendications**

1. Procédé pour la préparation d'acide nitrique par oxydation et absorption d'oxydes d'azote (NO$_x$) contenus dans un courant gazeux conjointement avec de l'oxygène dans une solution aqueuse dans un dispositif de mise en contact gaz/liquide en contre-courant avec un volume d'oxydation supérieur au volume d'absorption, caractérisé en ce que l'on effectue le procédé dans un rapport entre le volume d'oxydation et le volume d'absorption supérieur à 25, de préférence 30 et avec un rapport entre la surface du plateau d'absorption et la section de la colonne à plateaux de 0,2 jusqu'à 0,9, de préférence de 0,375 jusqu'à 0,625.

2. Procédé selon la revendication 1, caractérisé en ce qu'il est effectué avec une vitesse de tube de gaz vide de 0,4 jusqu'à 0,7 m/s, de préférence 0,5 m/s.

3. Procédé selon la revendication 1 ou 2, caractérisé en ce qu'il est effectué dans un rapport entre le volume liquide et le volume global de 0,02 jusqu'à 0,04, de préférence 0,03.

4. Colonne à plateaux pour la réalisation du procédé selon l'une des revendications 1 à 3, caractérisée en ce que pour l'ajustement d'un rapport entre le volume d'oxydation et le volume d'absorption supérieur à 25, de préférence 30, on limite la surface du plateau d'absorption 12 par rapport à la surface totale d'un plateau 10 par un barrage 11 dans un rapport entre la surface du plateau d'absorption et la section de la colonne à plateaux de 0,2 jusqu'à 0,9, de préférence de 0,375 jusqu'à 0,625.

5. Colonne à plateaux selon la revendication 4, caractérisée en ce que la surface d'absorption 12 est de conception ronde ou semi-circulaire.

6. Colonne à plateaux selon la revendication 4 ou 5, caractérisée en ce que la surface du plateau d'absorption 12 est de conception polygonale.

7. Colonne à plateaux selon la revendication 4 ou l'une quelconque des revendications suivantes, caractérisée en ce qu'au-dessus du barrage 11 sont agencés des dispositifs 16 pour le guidage du courant gazeux.

8. Colonne à plateaux selon la revendication 4 ou l'une quelconque des revendications suivantes, caractérisée en ce que les dispositifs destinés au guidage du courant gazeux sont conçus sous forme de tôles déflectrices ou chicanes 16.

Fig. 1

Fig. 2

Fig. 3

10a

11a

12a

13a

Fig. 4

11b

10b

12b

13b